# EUROPEAN PATENT APPLICATION

(11) **EP 2 037 400 A1**
(43) Date of publication of application: **18.03.2009**
(21) Application number: 08016222.5
(22) Date of filing: 15.09.2008
(51) Int. Cl.: G06Q 10/00

(54) **Balanced scorecard and reporting tool**

(30) Priority: 14.09.2007 US 972531 P; 14.01.2008 US 13934
(71) Applicant: Accenture Global Services GmbH, 8200 Schaffhausen (CH)
(72) Inventor: Eryaman, Ahmet M., Chicago, Illinois 60611 (US)
(74) Representative: Müller-Boré & Partner Patentanwälte

(57) **Abstract**

Methods and systems for developing key performance indicator (KPI) systems are provided. A centralized data store contains an indexed collection of KPIs. The KPIs may be arranged in a manner that facilitates rapid searching and retrieval. Multiple computer devices are connected to the centralized data store. The computer devices are programmed with computer-executable instructions for searching the data store and creating balanced scorecard applications that utilize one or more of the KPIs.

## Description

The present application claims priority to U.S. Provisional Application No. 60/972,531 filed on September 14, 2007 and U.S. Application No. 12/013,934 filed on January 14, 2008, the entire disclosure of which are hereby incorporated by reference.

### FIELD OF THE INVENTION

This invention relates generally to the development of key performance indicators (KPIs) and balanced scorecard systems. More particularly, aspects of the invention provide methods and systems for organizing KPIs and data utilized by multiple KPIs.

### DESCRIPTION OF RELATED ART

Balanced scorecards are management systems that enable organizations to clarify their vision and strategy and translate them into action. The balanced scorecard approach was developed by two Harvard Business school professors in the mid 1990's. The approach was developed after it was determined that financial results of a corporation are lagging indicators which are adequate for industrial age companies for which investments in long-term capabilities and customer relationships were not critical for success. These financial measures are inadequate, however, for guiding and evaluating the activities that information age companies make to create future value through investment in customers, suppliers, employees, processes, technology, and innovation.

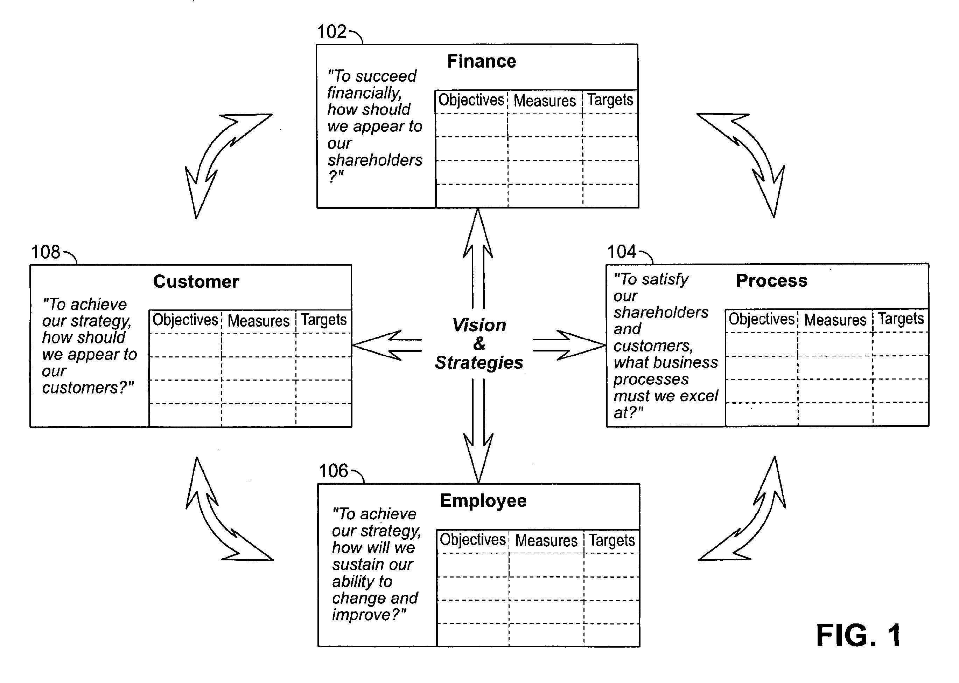

The balanced scorecard approach suggests that organizations be viewed from four perspectives. As shown in Figure 1, the perspectives include finance 102, process 104, employee 106 and customer 108. The finance perspective includes traditional financial data. The process perspective relates to internal business processes and allows a manager to determine how well a business is running and whether its products and services conform to customer requirements. The employee perspective relates to employee training and corporate cultural attitudes related to both individual and corporate self-improvement. The customer perspective relates to customer focus and customer satisfaction in any business. In balanced scorecard approach, the 4 perspectives mentioned above are the basic building blocs. Nevertheless, it is possible to come up with additional perspectives as it is required.

Key performance indicators (KPIs) are developed for each of the four perspectives and data is collected and analyzed relative to each of the KPIs. Data used to calculate KPIs may include: customer, product and service performance, operations, market, competitive comparisons, supplier, employee-related, and cost and financial data.

The development of a KPIs can be time consuming and may require extracting data from multiple systems, such as human resources systems and accounting systems. With existing approaches it is common for developers to create redundant and similar KPIs and for balanced scorecard systems to extract the same data multiple times for use by multiple KPIs.

Therefore, there is a need in the art for systems and methods for developing and organizing KPIs that are used by balanced scorecard systems and other systems.

### BRIEF SUMMARY OF THE INVENTION

Aspects of the invention overcome problems and limitations of the prior art by providing systems and methods that utilize a central data store that contains KPIs. The KPIs may be developed by a number of people within or external to an enterprise. The KPIs may be arranged a manner that facilitates rapid searching and retrieval. Multiple computer devices are connected to the central data store. The computer devices are programmed with computer-executable instructions for searching the data store and creating balanced scorecard applications that utilize one or more of the KPIs. Some embodiments include applications that retrieve data and calculate KPI value.

Some embodiments of the invention may include or utilize computer-executable instructions for performing one or more of the disclosed methods. The computer-executable instructions may be stored on a tangible computer-readable medium, such as a portable memory drive or optical disk.

### BRIEF DESCRIPTION OF THE DRAWINGS

The present invention is illustrated by way of example and not limited in the accompanying figures in which like reference numerals indicate similar elements and in which:

Figure 1 illustrates an exemplary balanced scorecard methodology.

Figure 2 shows a typical prior art workstation and communication connections.

Figure 3 illustrates a system for developing and managing KPIs, in accordance with an embodiment of the invention.

Figure 4 illustrates a graphical user interface tree structure that lists KPIs stored in a KPI collection, in accordance with an embodiment of the invention.

Figure 5 illustrates a system for calculating balanced scorecard values, in accordance with an embodiment of the invention.

### DETAILED DESCRIPTION

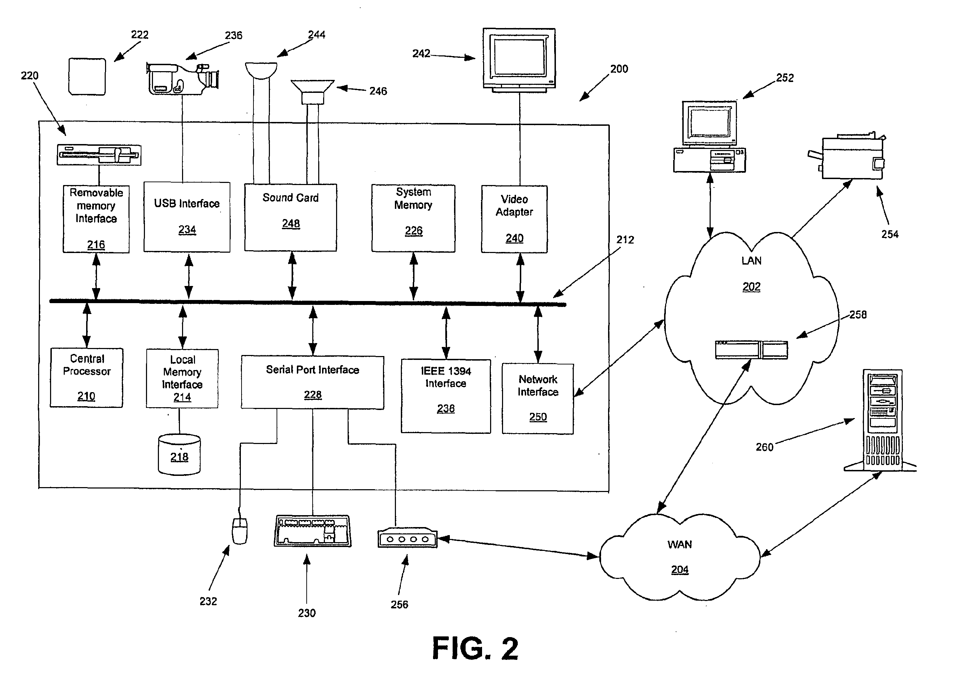

Various embodiments of the present invention may be implemented with computer devices and systems that exchange and process data. Elements of an exemplary computer system are illustrated in FIG. 2, in which the computer 200 is connected to a local area network (LAN) 202 and a wide area network (WAN) 204. Computer 200 includes a central processor 210 that controls the overall operation of the computer and a system bus 212 that connects central processor 210 to the components described below. System bus 212 may be implemented with any one of a variety of conventional bus architectures.

Computer 200 can include a variety of interface units and drives for reading and writing data or files. In particular, computer 200 includes a local memory interface 214 and a removable memory interface 216 respectively coupling a hard disk drive 218 and a removable memory drive 220 to system bus 212. Examples of removable memory drives include magnetic disk drives and optical disk drives. Hard disks generally include one or more read/write heads that convert bits to magnetic pulses when writing to a computer-readable medium and magnetic pulses to bits when reading data from the computer readable medium. A single hard disk drive 218 and a single removable memory drive 220 are shown for illustration purposes only and with the understanding that computer 200 may include several of such drives. Furthermore, computer 200 may include drives for interfacing with other types of computer readable media such as magneto-optical drives.

Unlike hard disks, system memories, such as system memory 226, generally read and write data electronically and do not include read/write heads. System memory 226 may be implemented with a conventional system memory having a read only memory section that stores a basic input/output system (BIOS) and a random access memory (RAM) that stores other data and files.

A user can interact with computer 200 with a variety of input devices. FIG. 2 shows a serial port interface 228 coupling a keyboard 230 and a pointing device 232 to system bus 212. Pointing device 232 may be implemented with a hard-wired or wireless mouse, track ball, pen device, or similar device.

Computer 200 may include additional interfaces for connecting peripheral devices to system bus 212. FIG. 2 shows a universal serial bus (USB) interface 234 coupling a video or digital camera 236 to system bus 212. An IEEE 1394 interface 238 may be used to couple additional devices to computer 200. Furthermore, interface 238 may be configured to operate with particular manufacture interfaces such as FireWire developed by Apple Computer and i.Link developed by Sony. Peripheral devices may include touch sensitive screens, game pads scanners, printers, and other input and output devices and may be coupled to system bus 212 through parallel ports, game ports, PCI boards or any other interface used to couple peripheral devices to a computer.

Computer 200 also includes a video adapter 240 coupling a display device 242 to system bus 212. Display device 242 may include a cathode ray tube (CRT), liquid crystal display (LCD), field emission display (FED), plasma display or any other device that produces an image that is viewable by the user. Sound can be recorded and reproduced with a microphone 244 and a speaker 246. A sound card 248 may be used to couple microphone 244 and speaker 246 to system bus 212.

One skilled in the art will appreciate that the device connections shown in FIG. 2 are for illustration purposes only and that several of the peripheral devices could be coupled to system bus 212 via alternative interfaces. For example, video camera 236 could be connected to IEEE 1394 interface 238 and pointing device 232 could be connected to USB interface 234.

Computer 200 includes a network interface 250 that couples system bus 212 to LAN 202. LAN 202 may have one or more of the well-known LAN topologies and may use a variety of different protocols, such as Ethernet. Computer 200 may communicate with other computers and devices connected to LAN 202, such as computer 252 and printer 254. Computers and other devices may be connected to LAN 202 via twisted pair wires, coaxial cable, fiber optics or other media. Alternatively, radio waves may be used to connect one or more computers or devices to LAN 202.

A wide area network 204, such as the Internet, can also be accessed by computer 200. FIG. 2 shows a modem unit 256 connected to serial port interface 228 and to WAN 204. Modem unit 256 may be located within or external to computer 200 and may be any type of conventional modem, such as a cable modem or a satellite modem. LAN 202 may also be used to connect to WAN 204. FIG. 2 shows a router 258 that may connect LAN 202 to WAN 204 in a conventional manner. A server 260 is shown connected to WAN 204. Of course, numerous additional servers, computers, handheld devices, personal digital assistants, telephones and other devices may also be connected to WAN 204.

The operation of computer 200 and server 260 can be controlled by computer-executable instructions stored on a computer-readable medium 222. For example, computer 200 may include computer-executable instructions for transmitting information to server 260, receiving information from server 260 and displaying the received information on display device 242. Furthermore, server 260 may include computer-executable instructions for transmitting hypertext markup language (HTML) and extensible markup language (XML) computer code to computer 200.

As noted above, the term "network" as used herein and depicted in the drawings should be broadly interpreted to include not only systems in which remote storage devices are coupled together via one or more communication paths, but also stand-alone devices that may be coupled, from time to time, to such systems that have storage capability. Consequently, the term "network" includes not only a "physical network" 202, 204, but also a "content network," which is comprised of the data-attributable to a single entity-which resides across all physical networks.

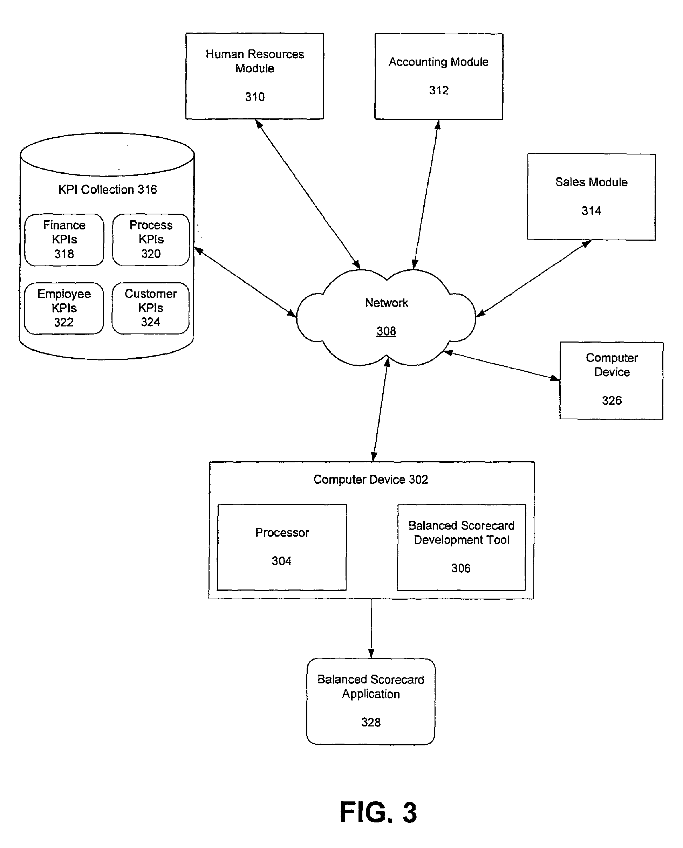

Figure 3 illustrates a system for developing and managing KPIs, in accordance with an embodiment of the invention. A computer device 302 includes a processor 304 and a balanced scorecard development tool 306. Processor 304 may be implemented with a conventional microprocessor or other device used to control the operation of a computer device. Balanced scorecard development tool 306 sets may be implemented with a software application that when executed by processor 304 allows a developer to create a balanced scorecard and create and manage KPIs. Computer device 302 may be connected to a variety of sources of data via a network 308.

Network 308 may be implemented with a local area network, wide-area network and/or various combinations of local and wide area networks. A human resources module 310 may include human resources related data, such as records of employee training events and employee reviews. An accounting module may include accounting related data, such as a general ledger and balance sheets. A sales module 314 may include sales related data. One skilled in the art will appreciate that a variety of additional modules may be included and that those modules may include data used to calculate KPI's. The modules shown in Figure 3 and additional modules may be implemented with various hardware and software configurations. Some or all of the modules may be implemented with unique hardware configurations and may utilize unique APIs to retrieve data. For example, accounting module 312 may be implemented with an accounting application that is linked to a database that stores accounting data. The accounting application may utilize the specific API for retrieving accounting data. Human resource module 310 may be implemented with a database application that utilizes different APIs for retrieving data.

A KPI collection 316 may include a variety of KPIs. For example, KPI collection 316 may include finance KPIs 318, process KPIs 320, employee KPIs 322 and customer KPI's 324. One skilled in the art will appreciate the numerous alternative and/or additional types of KPIs may be included. KPI collection 316 may be linked to computer device 302 via a network 308. KPI collection 316 may be implemented with a database or other mechanism for storing and arranging KPIs. Storing the KPIs in a central location such that computer devices 302 and 326, may access the collection allows multiple users to search and reuse KPIs. For example, after a user of computer device 302 creates and stores a specific process KPI within KPI collection 316, another user may search through the process KPIs when developing a new KPI to see if an appropriate KPI already exists. Computer devices 302 and 326 may utilize one or more KPIs included in KPI collection 316 to create balanced score applications, such as balanced scorecard application 328. Balanced scorecard application 328 may be implemented with a spreadsheet, database application or any other type of application that retrieves data and performs calculations.

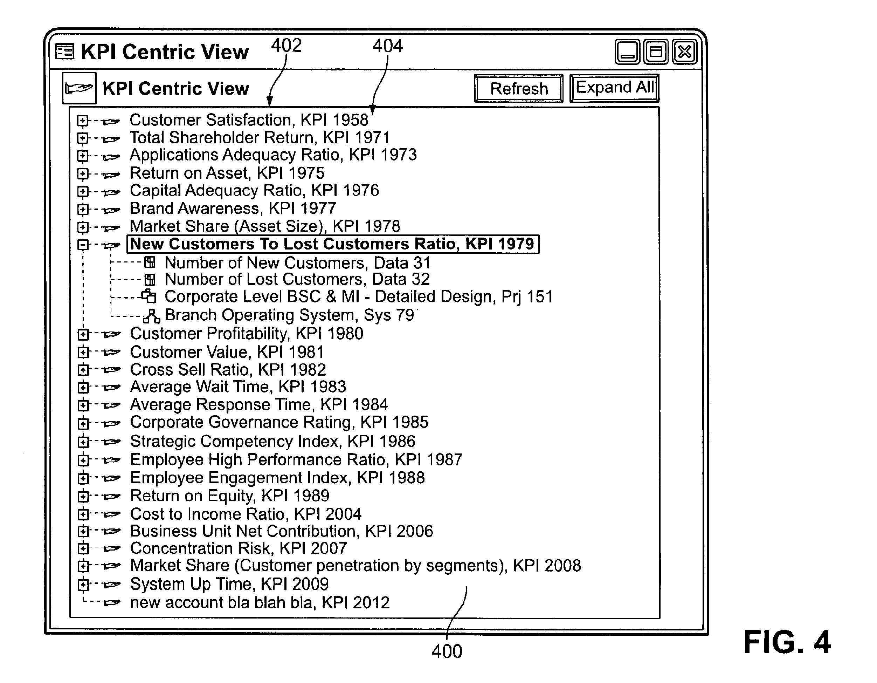

In one embodiment, KPI collection 316 may be arranged in a hierarchical manner to allow for the rapid searching of KPI's. Figure 4 illustrates an exemplary graphical user interface tree structure 400 that lists exemplary KPIs stored in KPI collection 316. Each KPI may include a description, such as description 404, and a reference number, such as reference number 406. Selecting a specific KPI may reveal information such as the objectives, measures and targets of the KPI. Several KPIs may be cascaded. Three different types of cascading may be used. Direct cascading may be achieved through formulas. For example, the same KPI may be used at the corporate and the business unit levels. Translation cascading may be achieved by making one KPI a component of another KPI. For example, a KPI at the business level may be a component of KPIs at each business unit. Cause and effect cascading may also be used when one KPI influences one or more other KPIs.

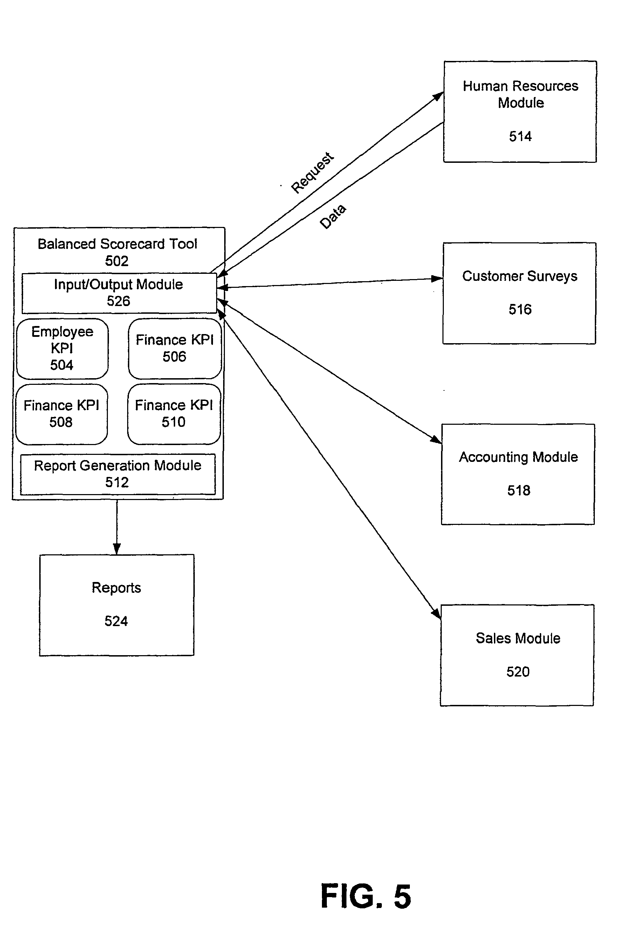

Figure 5 illustrates a system for calculating balanced scorecard values, in accordance with an embodiment of the invention. A balanced scorecard tool 502 may be hosted on a computer device, such as a desktop, laptop or server computer. Balanced scorecard tool 502 may include one or more KPIs that are calculated by the tool. In the example shown, a single employee KPI 504 and three finance KPIs 506, 508, and 510 are shown for illustration purposes only. One skilled in the art will appreciate that multiple additional or substitute KPIs may be used in various embodiments of the invention. An input/output module 526 may be used to send or receive data to a plurality of data sources. In various embodiments, input/output module 526 is implemented with a network interface card.

When calculating KPIs, balanced scorecard tool 502 may request data from a variety of different sources. In the example shown in Figure 5, balanced scorecard tool 502 requests data from a human resources module 514, customer surveys 516, an accounting module 518 and a sales module 520. Requested data is transmitted from the data sources to balanced scorecard tool 502. In various implementations of aspects of the invention, balanced scorecard tool 502 is structured to coordinate requests for data used to calculate multiple KPIs so that multiple requests are not used to extract the same data from the data sources. For example, if finance KPI 506 needs to request a value from accounting module 518 and finance KPI 510 needs to extract the same value, balanced scorecard tool 502 will make a single request for the value to accounting module 518 and utilize the data when calculating values for all of the relevant KPIs. Reducing the number of requests for data results in a lower bandwidth requirement for the transmission media between balanced scorecard tool 502 and data sources.

Balanced scorecard tool 502 may also include a report generation module 522. Report generation module 522 may be used to generate reports 524 that may be displayed on a display device and/or printed on paper. Report generation module 522 may include computer-executable instructions for formatting reports in a manner desired by users.

Data and information needed for performance measurement and improvement are of many types, including: customer, product and service performance, operations, market, competitive comparisons, supplier, employee-related, and cost and financial. Analysis entails using data to determine trends, projections, and cause and effect -- that might not be evident without analysis. Data and analysis support a variety of company purposes, such as planning, reviewing company performance, improving operations, and comparing company performance with competitors' or with 'best practices' benchmarks."

The present invention has been described herein with reference to specific exemplary embodiments thereof. It will be apparent to those skilled in the art that a person understanding this invention may conceive of changes or other embodiments or variations, which utilize the principles of this invention without departing from the broader spirit and scope of the invention as set forth in the appended claims. For example, aspects of the invention may be used with systems that calculate values other than KPIs. All are considered within the sphere, spirit, and scope of the invention.

## Claims

1. A key performance indicator development system, the system comprising:
a data store containing a collection of KPIs;
a first computer device connected to the data store and programmed with a first balanced scorecard development tool that is configured to access KPIs included in the data store; and
a second computer device connected to the data store and programmed with a second balanced scorecard development tool that is configured to access KPIs included in the data store.

2. The system of claim 1,wherein the data store comprises a database.

3. The system of claim 2, wherein the database includes key performance indicators arranged in a hierarchical manner.

4. The system of any one of the preceding claims, wherein the data store is connected to the first computer via a network, wherein the network preferably comprises a wide area network.

5. The system of any one of the preceding claims, further including a first data source connected to the data store and having a first application programming interface for accessing data.

6. The system of any one of the preceding claims, further including a second data source connected to the data store and having a second application programming interface for accessing data.

7. The system of any one of the preceding claims, further including a third computer device programmed with a balanced scorecard tool configured to extract data from the first data source using a single application programming interface call and calculate values for multiple KPIs using the extracted data.

8. The system of any one of the preceding claims, wherein the data store further contains a collection of design information for each KPI.

9. A computer-implemented method of calculating values for multiple key performance indicators of balanced scorecards, the method comprising:
extracting a value from a data store;
calculating a first kpi with the extracted value; and
calculating a second kpi with the extracted value;
wherein the first kpi does not have a hierarchical relationship with the second kpi.

10. The method of claim 9, wherein the data store comprises a database, a general ledger, customer survey results and/or human resources data, wherein the human resources data preferably comprises a number of training sessions attended by an employee and/or employee satisfaction data.

11. A computer program product comprising computer-readable instructions which, when loaded and executed on a suitable system, perform the steps of a method of calculating values for multiple key performance indicators of balanced scorecards according to claim 9 or 10.

12. A computer-readable medium containing computer-executable instructions for calculating values for multiple key performance indicators of balanced scorecards by performing the steps comprising:
extracting a value from a data store;
calculating a first kpi with the extracted value; and
calculating a second kpi with the extracted value;
wherein the first kpi does not have a hierarchical relationship with the second kpi.

13. The computer-readable medium of claim 12, wherein the data store comprises a database and/or a general ledger.

14. A balanced scorecard development system, the system comprising:
a data store containing an indexed collection of KPIs; and
a plurality of computer devices programmed with computer-executable instructions for searching the data store and creating balanced scorecard applications that utilize at least on of the KPIs.

15. The balanced scorecard development system of claim 14, wherein the data store comprises a database connected to the plurality of computer devices via a local area network.
